# EUROPÄISCHE PATENTSCHRIFT

(11) **EP 1 212 561 B1**
(45) Veröffentlichungstag und Bekanntmachung des Hinweises auf die Patenterteilung: **19.11.2003**
(21) Anmeldenummer: 00964014.5
(22) Anmeldetag: 11.08.2000
(51) Int. Cl.: F16K 31/06, B60T 8/36

(54) **ELEKTROMAGNETVENTIL**
ELECTROMAGNETIC VALVE
SOUPAPE ELECTROMAGNETIQUE

(30) Priorität: 25.08.1999 DE 19940179; 03.02.2000 DE 10004692
(43) Veröffentlichungstag der Anmeldung: 12.06.2002
(73) Patentinhaber: Continental Teves AG & Co. oHG, 60488 Frankfurt (DE)
(72) Erfinder: VOLZ, Peter, 64291 Darmstadt (DE)
(86) Internationale Anmeldenummer: EP0007864
(87) Internationale Veröffentlichungsnummer: WO01014776

(56) Entgegenhaltungen:
- DE-A- 19 646 835
- DE-A- 19 727 654
- US-A- 5 810 330

## Beschreibung

Die Erfindung betrifft ein Elektromagnetventil nach dem Oberbegriff des Patentanspruchs 1.

Aus der DE 196 03 383 A1 ist ein Elektromagnetventil bekannt geworden, das zur Befestigung des Ventilgehäuses im Ventilaufnahmekörper eine mit einer Clinchkontur versehene Magnetschlussscheibe aufweist, auf der eine Ventilspule mit einem Jochring ruht. Die Magnetschlussscheibe nimmt gleichzeitig das offene Ende eines domförmigen Hülsenteils auf. Der Ventilsitz ist an einem Zylindereinsatz befestigt, der sich bis zu einem Magnetanker in das Hülsenteil erstreckt.

Das Ventilgehäuse besteht demnach aus dem sich in das Hülsenteil erstreckenden Zylindereinsatz und dem daran befestigten Ventilsitz. Infolge der auf das Ventilgehäuse einwirkenden Einpresskraft ist der Zylindereinsatz aus einem massiven Drehteil hergestellt. Insgesamt ist der Herstellaufwand für das Ventil relativ hoch.

Ein Elektromagnetventil der angegebenen Art ist aus der DE 196 46 835 A1 bekannt, das in einem Ventilgehäuse einen zweiteilig ausgeführten Magnetanker aufnimmt, der einen ersten als auch einen zweiten Magnetankerluftspalt gegenüber einem Magnetkern aufweist, wobei beide Magnetankerteile relativ zueinander axial beweglich sind. Das Ventilgehäuse ist in Patronenbauweise hergestellt, in dessen Bohrung sich ein am zweiteiligen Magnetanker angebrachtes Ventilschließglied in Richtung auf einen Ventilsitz erstreckt, der unmittelbar am unteren Ende der Bohrung des Ventilgehäuses angeordnet ist.

Die Aufgabe der Erfindung ist es, ein Elektromagnetventil der angegebenen Art mit möglichst geringem Aufwand herzustellen, wobei die mechanische Beanspruchung des Ventils als auch die notwendigen Einstellmaßnahmen auf ein Minimum begrenzt werden sollen.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung eines Ausführungsbeispieles hervor.

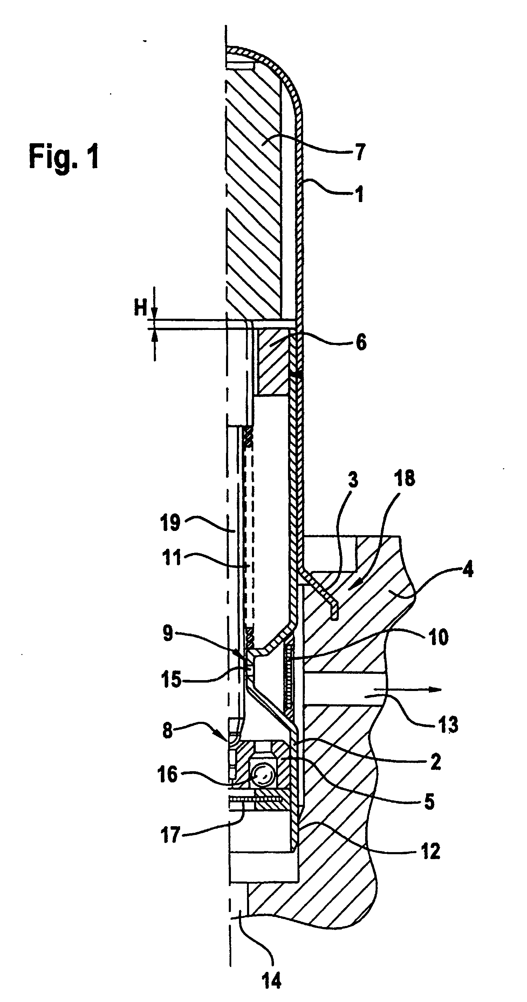

Die Fig. 1 zeigt in erheblich vergrößerter Darstellung einen Halbschnitt durch ein Elektromagnetventil, dessen Ventilgehäuse aus zwei ineinander gefügte, als Blechformteile im Tiefziehverfahren hergestellte Hülsenteile 1,2 besteht, so dass eine eigenständig handhabbare und funktionsfähig vormontierte Ventilbaugruppe hergestellt ist, die abbildungsgemäß im unteren, zweiten Hülsenteil 2 einen plattenförmigen Ventilsitz 5 aufnimmt. Die Ventilbaugruppe trägt im domförmig geschlossenen Hülsenteil 1 einen Magnetanker 7. Das vom ersten Hülsenteil 1 abgewandte offene Ende des zweiten Hülsenteils 2 weist einen elastischen Presssitz in der Funktion eines metallischen Dichtsitzes 12 auf, der in Verbindung mit der Bohrungswandung des Ventilaufnahmekörpers 4 zustande kommt, so dass ein Kurzschlussstrom zwischen den den Ventilaufnahmekörper 4 durchdringenden beiden Druckmittelkanälen 13,14 entlang der Wandung, d.h. zwischen dem Elektromagnetventil und dem Ventilaufnahmekörper 4, verhindert wird. Beide Hülsenteile 1,2 sind mit ihren vom Ventilsitz 5 und dem Magnetanker 7 abgewandten Abschnitten teleskopartig ineinander geschoben und in diesem Überdeckungsbereich von außen mittels einer Laserschweißung unlösbar verbunden.

Um das aus den beiden Hülsenteilen 1, 2 bestehende Ventilgehäuse in dem abbildungsgemäßen Ventilaufnahmekörper 4 zu befestigen, weist das äußere, über das zweite Hülsenteil 2 ragende erste Hülsenteil 1 am zunächst offenen Ende einen konischen Haltekragen 3 auf, der durch eine Außenverstemmung 18 an der Oberfläche des Ventilaufnahmekörpers 4 sicher und auch druckmitteldicht in einer Ventilaufnahmebohrung befestigt ist. Gegebenenfalls kann anstelle der gezeigten Außenverstemmung 18 der Haltekragen 3 bei entsprechender Schweißeignung der Werkstoffe auch am Ventilaufnahmekörper 4 direkt angeschweißt werden.

Das innere, sowohl im Ventilaufnahmekörper 4 als auch im ersten Halteteil 1 befindliche Halteteil 2 weist ferner einen vorzugsweise hohlkehlenförmig verengten bzw. verjüngten Stufenabschnitt 9 auf Höhe des horizontal im Ventilaufnahmekörper 4 verlaufenden Druckmittelkanals 13 auf. Der Außenbereich des Stufenabschnitts 9 ist zweckmäßigerweise von einem ringförmigen Filter 10 umgeben. Der Stufenabschnitt 9 übernimmt gleichzeitig eine Führungsfunktion am Stößel 19 des Ventilschließgliedes 8, um die exakte Zentrierung des Ventilschließgliedes 8 gegenüber dem Ventilsitz 5 zu ermöglichen. Andererseits gewährleistet der Stufenabschnitt 9 in der Funktion eines Federanschlags das Abstützen der den Stößel 19 gegen den Magnetanker 7 drückenden Rückstellfeder 11.

Ein an die Innenkontur des zweiten Hülsenteils 2 angepasstes, als Magnetkern 6 wirksames Ringteil befindet sich kraftschlüssig in Nähe des Magnetankers 7 gehalten. Durch das Ringteil erstreckt sich der Stößel 19 auf die ihm zugewandte Stirnfläche des Magnetankers 7, an dem er lose anliegt, weshalb der Stößel 19 mit geringer Spielpassung im Ringteil geführt ist.

Die Druckmittelverbindung zwischen den quer als auch längs zur Ventilrotationsachse im Ventilaufnahmekörper 4 angeordneten Druckmittelkanälen 13,14 ist abbildungsgemäß in der elektromagnetisch stromlos offenen Ventilgrundstellung gewährleistet. In der elektromagnetisch erregten Ventilschaltstellung herrscht eine Unterbrechung der Druckmittelverbindung über den dann vom Ventilschließglied 8 verschlossenen Ventilsitz 5. Über das in dem zweiten, inneren Hülsenteil 2 auf Höhe des Stufenabschnitts 9 befindliche Durchgangsbohrung 15 erfolgt sodann kein Druckmittelaustausch zwischen den beiden Druckmittelkanälen 13,14. Diese Durchgangsbohrung 15 kann bei Wunsch oder Bedarf als beispielsweise im Prägeverfahren hergestellte Kalibrierbohrung ausgeführt sein, die dann die Funktion einer Blende übernimmt.

Die Aufgabe der Erfindung, ein kostengünstiges stromlos offenes Elektromagnetventil zu schaffen, wird durch die Verwendung der bereits dargestellten Konstruktionsmerkmalen unter Einbeziehung geeigneter Schlagteil- und Blechformtechnik gelöst. Darüber hinaus wird mit der vorgeschlagenen Ventilkonstruktion eine besonders einfache Ventilmontage und Justierung des Magnetankerrestluftspaltes sowie des Gesamtventilhubs möglich.

Wie aus der Fig. 1 hervorgeht, ist das Elektromagnetventil als eine verblüffend einfache Schweißpatrone ausgeführt. In dem Ventilaufnahmekörper 4 wird das vorgeprüfte und bereits voreingestellte und verschweißte Elektromagnetventil an dem Dichtsitz 12 im Ventilaufnahmekörper 4 positioniert und infolge der Außenverstemmung 18 am Haltekragen 3 im Ventilaufnahmekörper 4 sicher fixiert. Der Dichtsitz 12 besteht aus einem elastischen und metallischen Presssitz. Die Außenverstemmung 18 erfolgt durch plastische Verformung des vorzugsweise aus einer Aluminiumknetlegierung bestehenden Ventilaufnahmekörpers 4 und einer unter einem Winkel verlaufenden Trennfuge.

Der als Ventilplatte ausgeführte Ventilsitz 5 ist in der Innenhülse, d.h. in dem zweiten Hülsenteil 2 dicht eingepresst und ggf. zusätzlich mit diesem durch Laserschweißung dicht verbunden. Die Ventilplatte nimmt ein Rückschlagventil 16 auf. Die Kugel des Rückschlagventils 16 wird in der dargestellten Ausführung durch den Rahmen eines Plattenfilters 17, der partiell ausgespart ist, in einer Bypassbohrung des Ventilsitzes 5 gehalten. Der Stufenabschnitt 9 kann entweder am vollen Umfang eingezogen oder partiell an mindestens drei Umfangsstellen eingeprägt sein. Das Filter 10 ist vorzugsweise in der Einschnürung bzw. Aussparung des Stufenabschnitts 9 eingeschnappt. Bei Wunsch oder Bedarf kann das Filter 10 auch in dem Zwischenraum, der durch das zweite Hülsenteil 2 und den Ventilaufnahmekörper 4 gebildet wird, angeordnet sein.

Der Restluftspalt H lässt sich bei der gewählten Konstruktion sehr präzise und einfach einstellen, indem der Stößel 19 in das mit dem Ventilsitz 5 und dem Magnetkern 6 versehene zweite Hülsenteil 2 eingeführt und das Spaltmaß durch Verschieben des Magnetkerns 6 mit einem Stufenwerkzeug eingestellt wird. Nach der Einstellung wird der Magnetkern 6 mit der zweiten Hülse 2 fixiert. Die Fixierung kann durch eine Verstemm- oder eine partielle Schweißoperation erfolgen. Damit ist der Restluftspalt H extrem genau eingestellt.

Der Stößelhub am Ventilsitz 5 kann nun durch Hin- und Herschieben des mit dem Magnetanker versehenen ersten Hülsenteils 1 auf dem zweiten Hülsenteil 2 in einfacher Weise eingestellt werden. Der gewünschte Stößelhub kann durch Messen des Luftdurchsatzes am Ventilsitz 5 oder aber durch Ermittlung der Differenzmaße zwischen dem Magnetanker 7, dem Stößel 19 sowie zwischen dem zweiten Hülsenteil 2 und dem ersten Hülsenteil 1 eingestellt werden.

Eine weitere, einfache Einstellmethode für den Stößelhub besteht darin, gemeinsam mit dem Magnetanker 7 und dem ersten Hülsenteil 1 den Stößel 19 auf den in der zweiten Hülse 2 befestigten Ventilsitz 5 zu pressen, die Gesamtlänge des Ventils oder ein Bezugsmaß zu messen. Dieses Meßergebnis wird dann um den gewünschten Stößelhub durch Auseinanderziehen beider Ventilhülsen, das heißt durch das Auseinanderziehen der Hülsenteile 1,2 vergrößert. Damit ist der Stößelhub exakt eingestellt. Nach der Einstellung des Gesamthubs am Ventilsitz 5 wird das erste Hülsenteil 1 mit dem zweiten Hülsenteil 2 wenigstens partiell verschweißt, wobei auch anstelle der Schweißverbindung eine Scheroperation möglich ist. Die Länge des zweiten Hülsenteils 2 sowie die Länge des Magnetkerns 6 können optimal den Gegebenheiten der nicht dargestellten Magnetspule angepasst werden.

Vorteilhaft ist u.a. die Verwendung eines korrosionsbeständigen Hülsenwerkstoffs für das erste Hülsenteil 1, das die übrigen Bestandteile des Ventils vor Korrosion schützt. Hierdurch können die Innenteile des Ventils aus nicht korrosionsbeständigen, leicht bearbeitbaren und billigen Werkstoffen hergestellt werden.

In Verbindung mit einem auf das Elektromagnetventil aufsetzbaren elektronischen Regler, der im vorliegenden Beispiel auch eine zur Betätigung des Ventils erforderliche Magnetspule aufnimmt, muss das Reglergehäuse nunmehr nicht mehr hermetisch dicht gegen Wasser abgeschlossen werden. Es kann folglich auf die bisher bekannten Abdichtungsmaßnahmen zwischen dem Ventilaufnahmekörper 4 und dem elektronischen Regler verzichtet werden. Vorteilhaft ist auch der minimale Werkstoffeinsatz durch die Verwendung von Blechteilen für die Hülsenteile 1, 2 und Kaltschlagteilen für den Magnetkern 6, den Magnetanker 7, Ventilsitz 5 und gegebenenfalls auch für den Stößel 19.

Die Ventileinstellung ist extrem einfach und toleranzunempfindlich. Durch die gewählte Konstruktion kann auch auf eine flüssigkeitsdichte Schweißnahtkonstruktion verzichtet werden.

Bei Bedarf kann eine Blendenfunktion durch einen entsprechenden Stanzvorgang in das zweite Hülsenteil 2 realisiert werden. Wie bereits erwähnt, kann der Stößel entweder zur Gewichtsreduzierung aus Kunststoff oder in Kaltschlagtechnik hergestellt werden.

Damit sind auch alle Voraussetzungen zum Betrieb des Elektromagnetventils als analog ansteuerbares Regelventil denkbar, sofern eine geeignete Regelelektronik zum Einsatz gelangt.

### Bezugszeichenliste

- 1: Erstes Hülsenteil
- 2: Zweites Hülsenteil
- 3: Haltekragen
- 4: Ventilaufnahmekörper
- 5: Ventilsitz
- 6: Magnetkern
- 7: Magnetanker
- 8: Ventilschließglied
- 9: Stufenabschnitt
- 10: Filter
- 11: Rückstellfeder
- 12: Dichtsitz
- 13: Druckmittelkanal
- 14: Druckmittelkanal
- 15: Durchgangsbohrung
- 16: Rückschlagventil
- 17: Plattenfilter
- 18: Außenverstemmung
- 19: Stößel
- H: Restluftspalt

## Patentansprüche

1. Elektromagnetventil mit einem einen Magnetanker (7), ein Magnetkernteil (6), ein Ventilschließglied (8) und einen Ventilsitz (5) aufnehmenden Ventilgehäuse, an dem eine Magnetspule anbringbar ist, wobei ein von einem ersten Hülsenteil (1) abgewandtes offenes Ende vorzugsweise einen metallischen Dichtsitz (12) aufweist, der an einer Bohrungswandung eines Ventilaufnahmekörpers (4) dicht anliegt, **dadurch gekennzeichnet, dass** das Ventilgehäuse aus dem ersten, im Tiefziehverfahren hergestellten Hülsenteil (1) und einem teleskopartig in das erste Hülsenteil (1) einfügbaren zweiten Hülsenteil (2) besteht.

2. Elektromagnetventil nach Anspruch 1, **dadurch gekennzeichnet, dass** das erste Hülsenteil (1) in Richtung auf den Ventilaufnahmekörper (4) zu einem Haltekragen (3) ausgeformt ist, wobei das erste Hülsenteil (1) in dem teleskopartigen Überdeckungsbereich mit dem zweiten Hülsenteil (2) eine unlösbare, vorzugsweise mittels Laserschweißung hergestellte Verbindung aufweist.

3. Elektromagnetventil nach Anspruch 1 oder 2, **dadurch gekennzeichnet, dass** ein offenes Ende des ersten Hülsenteils (1), welches über das zweite Hülsenteil (2) gestülpt ist, den Haltekragen (3) aufweist, der in dem für das Elektromagnetventil vorgesehenen Ventilaufnahmekörper (4) form- und/oder kraftschlüssig, vorzugsweise im Ventilaufnahmekörper (4) verstemmt, befestigt ist.

4. Elektromagnetventil nach Anspruch 1, **dadurch gekennzeichnet, dass** in dem offenen Ende des zweiten Hülsenteils (2) der Ventilsitz (5) und in einem geschlossenen Endabschnitt des ersten Hülsenteils (1) der Magnetanker (7) angeordnet ist.

5. Elektromagnetventil nach Anspruch 3, **dadurch gekennzeichnet, dass** der Magnetanker (7) als Kaltschlagteil ausgeführt ist, an dem unter Wirkung einer Rückstellfeder (11) ein vorzugsweise aus Kunststoff hergestellter Stößel (19) anliegt, der ein Ventilschließglied (8) aufweist, das in der Ventilgrundstellung von einem vorzugsweise als Kaltschlagteil ausgeführten Ventilsitz (5) beabstandet ist.

6. Elektromagnetventil nach einem der vorhergehenden Ansprüche, **dadurch gekennzeichnet, dass** an einem dem Magnetanker (7) zugewandten offenen Ende des zweiten Hülsenteils (2) ein als Magnetkern (6) wirksames Ringteil fixiert ist, das vorzugsweise aus einem Kaltschlagteil hergestellt ist.

7. Elektromagnetventil nach Anspruch 5, **dadurch gekennzeichnet, dass** die Rückstellfeder (11) sich mit ihrem auf den Magnetanker (7) zugewandten Ende formschlüssig am Stößel (19) abstützt, und dass das dem Ventilsitz (5) zugewandte Federende sich an einem verjüngten Stufenabschnitt (9) des zweiten Hülsenteils (2) abstützt, der vorzugsweise den Stößel (19) gegenüber dem Ventilsitz (5) zentriert.

8. Elektromagnetventil nach Anspruch 7, **dadurch gekennzeichnet, dass** das zweite Hülsenteil (2) am verjüngten Stufenabschnitt (9) einen Filter (10) trägt.

## Claims

1. Electromagnetic valve including a magnet armature (7), a magnet core member (6), a valve closure member (8), and a valve housing accommodating a valve seat (5) to which a magnetic coil can be fitted, wherein an open end remote from a first sleeve member (1) preferably includes a metal sealing seat (12) that is in sealing abutment on a bore wall of a valve accommodating member (4),
**characterized in that** the valve housing is composed of a first deep-drawn sleeve member (1) and a second sleeve member (2) that can be inserted telescopically into the first sleeve member (1).

2. Electromagnetic valve as claimed in claim 1,
**characterized in that** the first sleeve member (1) in the direction of the valve accommodating member (4) is configured as a retaining collar (3), and the first sleeve member (1) in the telescopically overlapping area has a non-detachable connection with the second sleeve member (2), preferably made by means of laser welding.

3. Electromagnetic valve as claimed in claim 1 or 2,
**characterized in that** an open end of the first sleeve member (1) which is slipped over the second sleeve member (2) includes the retaining collar (3) which is fastened in the valve accommodating member (4) provided for the electromagnetic valve in positive and/or operative engagement therewith, preferably is wedged in the valve accommodating member (4).

4. Electromagnetic valve as claimed in claim 1,
**characterized in that** the valve seat (5) is arranged in the open end of the second sleeve member (2), and the magnet armature (7) in arranged in a closed end portion of the first sleeve member (1).

5. Electromagnetic valve as claimed in claim 3,
**characterized in that** the magnet armature (7) is configured as a cold-formed component part on which a tappet (19) which is preferably made of plastics abuts under the effect of a resetting spring (11), the said tappet including a valve closure member (8) which, in the valve's basic position, is spaced from a valve seat (5) that is preferably designed as a cold-formed component part.

6. Electromagnetic valve as claimed in any one of the preceding claims,
**characterized in that** fixed to an open end of the second sleeve member (2) that faces the magnet armature (7) is an annular part which acts as magnet core (6) and is preferably made of a cold-formed component part.

7. Electromagnetic valve as claimed in claim 5,
**characterized in that** the resetting spring (11) with its end facing the magnet armature (7) is supported on the tappet (19) in form lock therewith, and **in that** the spring end facing the valve seat (5) is supported on a tapered stepped portion (9) of the second sleeve member (2) which preferably centres the tappet (19) in relation to the valve seat (5).

8. Electromagnetic valve as claimed in claim 7,
**characterized in that** the second sleeve member (2) at the tapered stepped portion (9) carries a filter (10).

## Revendications

1. Electrovanne comprenant un boîtier de vanne qui reçoit une armature mobile (7), une pièce formant noyau magnétique (6), un obturateur de vanne (8) et un siège de vanne (5) et sur lequel peut être posée une bobine d'électroaimant, tandis qu'une extrémité ouverte qui est située à l'opposé d'une première pièce-manchon (1) comporte de préférence un siège d'étanchéité métallique (12) qui prend appui d'une manière étanche sur une paroi d'alésage d'un corps de réception de vanne (4), **caractérisée en ce que** le boîtier de vanne est constitué de la première pièce-manchon (1), réalisée par le procédé d'emboutissage, et d'une seconde pièce-manchon (2) pouvant être introduite d'une manière télescopique dans la première pièce-manchon (1).

2. Electrovanne suivant la revendication 1, **caractérisée en ce que** la première pièce-manchon (1) est déformée, en direction vers corps de réception de vanne (4), pour former une collerette de maintien (3), tandis que, dans la zone de recouvrement télescopique avec la seconde pièce-manchon (2), la première pièce-manchon (1) présente une liaison inséparable, réalisée de préférence au moyen d'un soudage laser.

3. Electrovanne suivant la revendication 1 ou 2, **caractérisée en ce qu'**une extrémité ouverte de la première pièce-manchon (1), qui coiffe la seconde pièce-manchon (2), comporte la collerette de maintien (3), laquelle est fixée dans le corps de réception de vanne (4), prévu pour l'électrovanne, par complémentarité de formes et/ou par application de force, de préférence par matage dans le corps de réception de vanne (4).

4. Electrovanne suivant la revendication 1, **caractérisée en ce que** le siège de vanne (5) est disposé dans l'extrémité ouverte de la seconde pièce-manchon (2) et l'armature mobile (7) est disposée dans une partie d'extrémité fermée de la première pièce-manchon (1).

5. Electrovanne suivant la revendication 3, **caractérisée en ce que** l'armature mobile (7) est réalisée sous forme d'une pièce obtenue par frappe à froid sur laquelle prend appui, sous l'action d'un ressort de rappel (11), une tige-poussoir (19), réalisée de préférence en matière plastique, qui comporte un obturateur de vanne (8) qui, dans la position de base de vanne, est espacé d'un siège de vanne (5), réalisé de préférence sous forme d'une pièce obtenue par frappe à froid.

6. Electrovanne suivant l'une des revendications précédentes, **caractérisée en ce qu'**il est prévu, fixée sur une extrémité ouverte, située du côté de l'armature mobile (7), de la seconde pièce-manchon (2), une pièce annulaire qui joue le rôle de noyau magnétique (6) et qui est de préférence réalisé sous forme d'une pièce obtenue par frappe à froid.

7. Electrovanne suivant la revendication 5, **caractérisée en ce que** le ressort de rappel (11) prend appui par complémentarité de formes, par son extrémité située du côté de l'armature mobile (7), sur la tige-poussoir (19) et **en ce que** l'extrémité de ressort qui fait face au siège de vanne (5) prend appui sur une partie formant épaulement (9), plus étroite, de la seconde pièce-manchon (2) et qui centre de préférence la tige-poussoir (19) vis-à-vis du siège de vanne (5).

8. Electrovanne suivant la revendication 7, **caractérisée en ce que** la seconde pièce-manchon (2) porte, sur la partie formant épaulement (9) plus étroite, un filtre (10).
